# FASCICULE DE BREVET EUROPEEN

(11) **EP 0 630 840 B1**
(45) Date de publication et mention de la délivrance du brevet: **03.12.1997**
(21) Numéro de dépôt: 94401345.7
(22) Date de dépôt: 16.06.1994
(51) Int. Cl.: B65G 54/02, H02K 41/025, B60L 13/03

(54) **Dispositif de manutention à moteur linéaire comprenant des mobiles circulant le long d'un réseau**
Transporteinrichtung mit Linearmotorantrieb mit Träger, die um eine Bahn zirkulieren
Conveyor, with linear-motor drive and carriers which circulate around a track

(30) Priorité: 24.06.1993 FR 9307683
(43) Date de publication de la demande: 28.12.1994
(73) Titulaire: MATFLEX SA, F-94203 Ivry-sur-Seine Cédex (FR)
(72) Inventeur: Sebillaud, Jean, F-94500 Champigny (FR)
(74) Mandataire: Lhuillier, René

(56) Documents cités:
- EP-A- 0 160 523
- FR-A- 2 064 773
- FR-A- 2 382 792
- US-A- 4 388 543
- US-A- 4 922 830

## Description

L'invention est relative à un dispositif de manutention comprenant une voie s'étendant selon un trajet déterminé et constituant un chemin de roulement pour un ou plusieurs mobiles disposés le long de celle-ci, cette voie comportant des moyens de guidage pour les mobiles, lesdits mobiles comportant chacun des moyens de roulement pour coopérer avec ledit chemin de roulement et des moyens d'entraînement pour assurer leur déplacement individuel le long de la voie, les moyens d'entraînement comprenant un moteur électrique linéaire composé d'un inducteur porté par le mobile et s'étendant parallèlement à la voie, comprenant une pluralité de pôles magnétiques répartis le long de l'inducteur et entre lesquels sont interposées une pluralité de bobines de fil conducteur, et d'un induit porté par la voie et s'étendant le long de celle-ci de façon à pouvoir coopérer avec l'inducteur avec interposition d'un entrefer d'épaisseur déterminée (voir par exemple le document FR-A-2064773).

Le problème que vise à résoudre l'invention est de proposer un dispositif de ce type, dans lequel l'inducteur et l'induit du moteur linéaire ont une configuration mutuelle telle que les pertes magnétiques sont réduites au minimum, et qu'ils s'intègrent aisément dans la structure générale d'une voie linéaire.

Selon l'invention, ledit inducteur et ledit induit présentent, tel qu'observés en section transversale, le premier une forme rectangulaire définissant trois faces actives et une face inactive, et le second une forme de U définissant trois faces actives et adaptées pour loger l'inducteur de façon que les faces actives respectives de l'inducteur et de l'induit coopèrent entre elles deux à deux.

D'autres détails et avantages de l'invention apparaîtront au cours de la description suivante de quelques formes de réalisation préférées mais non limitatives, en regard des dessins annexés sur lesquels :
la figure 1 est une vue partielle en élévation latérale d'un mobile selon une première forme de réalisation de l'invention, suspendu à la voie du dispositif de manutention, l'un des rails de cette voie étant retiré ;
la figure 2 est une vue de côté du mobile de la figure 1, selon la flèche II de cette figure ;
la figure 3 est une vue de dessus des moyens d'entraînement du mobile, selon la ligne III-III de la figure 2 ;
la figure 4 est une vue en coupe des moyens d'entraînement du mobile, selon la ligne IV-IV de la figure 3 ;
la figure 5 est une vue en élévation latérale d'une balancelle équipant chaque mobile selon l'invention et
la figure 6 est une vue en élévation de côté, d'un mobile selon une seconde forme de réalisation de l'invention.

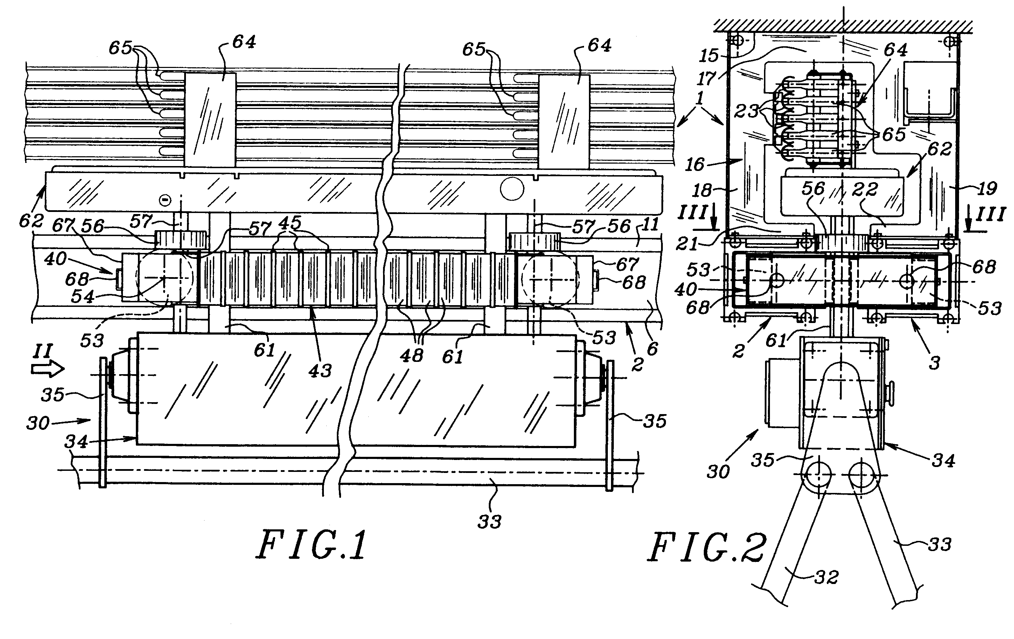

Le dispositif de manutention représenté sur les figures 1, 2 et 4 comprend une voie 1 constituée principalement de deux rails 2, 3 s'étendant longitudinalement sur toute la longueur de la voie. Chaque rail 2, 3 est constitué d'un profilé 4, 5 ayant une section transversale en forme générale de U présentant une base 6 et deux ailes 7, 8 prolongeant celle-ci le long de deux côtés opposés. Les ailes 7, 8 s'étendent, dans cet exemple, sur une largeur un peu supérieure à celle de la base 6. Chaque profilé 4, 5 en forme de U porte deux paires de rebords 11 faisant saillie vers l'extérieur sur ses deux ailes 7, 8 respectivement, un rebord 11 étant situé le long d'un bord libre de l'aile 7, 8 et l'autre entre l'aile 7, 8 et la base 6. Ces rebords sont évidés de façon connue en soi pour permettre un assemblage entre différentes portions de rails 2, 3 disposées bout à bout le long de la voie 1, au moyen de tiges d'assemblage non représentées. Chaque profilé 4, 5 en forme de U est réalisé en un matériau bon conducteur de l'électricité, notamment en aluminium.

Chaque profilé 4, 5 en forme de U est recouvert extérieurement de trois plaquettes longitudinales 12, 13, 14, s'étendant respectivement contre la base 6 et les deux ailes 7, 8 de chaque profilé en recouvrant sensiblement toute la surface de celles-ci située entre les rebords 11. Ces plaquettes sont réalisées en un matériau ferromagnétique tel que l'acier. Elles sont fixées sur chaque profilé 4, 5 de façon à autoriser une dilatation différentielle entre les deux matériaux : on pourra notamment employer le collage ou des moyens de butée agencés pour maintenir avec jeu les plaquettes en contact avec le profilé.

Les rails 2, 3 sont suspendus à un longeron de support 15 au moyen de plusieurs pattes de fixation 16 dont l'une est visible sur la figure 2, ces pattes étant réparties le long de la voie. Chaque patte de fixation 16 est en forme générale de C présentant une base 17, deux ailes perpendiculaires 18, 19 et deux rebords 21, 22 prolongeant respectivement les ailes, perpendiculairement à celles-ci. Chaque patte de fixation 16 est fixée par sa base 17 sur le longeron de support 15. Ses rebords 21, 22 présentent une longueur correspondant sensiblement à la largeur des ailes 7, 8 des profilés en forme de U des rails, ces ailes étant respectivement fixées sur les rebords 21, 22 de façon que les deux rails 2, 3 soient disposés en regard l'un de l'autre.

L'aile 18 de chaque patte de fixation 16 supporte cinq pistes de contact électrique 23 juxtaposées, s'étendant le long de la voie, dont trois sont reliées respectivement aux trois phases d'un réseau triphasé d'alimentation en énergie électrique, dont la quatrième est reliée à la terre, et dont la cinquième est reliée à un dispositif de commande du dispositif de manutention.

Sur la voie 1, sont disposés plusieurs mobiles indépendants les uns des autres, dont un 30 est visible sur les figures 1, 2 et 5. Chaque mobile comprend un plateau 31 horizontal suspendu par une potence, comprenant deux bras 32, 33 en forme de L juxtaposés, à un boîtier parallélépipédique 34 par l'intermédiaire de deux plaquettes de fixation 35. Le plateau 31 est recouvert d'un tapis roulant entraîné par un moteur électrique 36 et permettant le chargement ou le déchargement latéral automatique d'un colis 37 disposé sur le plateau 31.

Le boîtier 34 est suspendu à un bloc moteur 40 disposé dans les rails 2, 3 et destiné à entraîner le mobile 30 le long de la voie. Le bloc moteur 40 comprend essentiellement deux inducteurs identiques 42, 43 de moteur linéaire.

Chaque inducteur comprend de façon connue en soi un noyau magnétique allongé 44, de section transversale rectangulaire et constitué de plusieurs bandes superposées en un matériau ferromagnétique tel que l'acier, isolées électriquement les unes des autres. Sur le noyau 44, sont montés une vingtaine de pôles magnétiques 45, chacun étant constitué d'une couronne de section transversale carrée et de faible épaisseur, en acier. Chaque pôle 45 entoure le noyau 44 à l'exception d'une région faisant face à l'autre inducteur, dans laquelle le pôle comporte une échancrure étroite 46 en forme de V. Chaque pôle 45 a des dimensions telles qu'il est reçu dans le profilé en forme de U correspondant 4, 5 en ménageant un entrefer 47 de faible épaisseur le long de la base 6 et des ailes 7, 8 de ce profilé.

Entre deux pôles quelconques 45 de chaque inducteur, est disposée une bobine de fil conducteur 48, enroulée autour du noyau 44 selon une pluralité de spires. Les bobines sont regroupées en une pluralité de lots de trois bobines juxtaposées le long du noyau 44, les bobines de chaque lot correspondant respectivement aux trois phases du réseau électrique.

De façon connue en soi, un réflecteur de champ magnétique 51 équipe chaque inducteur et est constitué d'une plaquette plus épaisse que celles 12 à 14 équipant les profilés en forme de U 4, 5, qui s'étend sur sensiblement toute la longueur de l'inducteur et prend appui sur une face de celui-ci portant les échancrures 46. Le réflecteur porte deux rebords perpendiculaires 52, tournés vers l'autre inducteur et affleurant le bord libre des ailes 7, 8 du profilé en forme de U 4, 5. Il est réalisé en un matériau bon conducteur de l'électricité tel que l'aluminium et permet de limiter les pertes magnétiques.

Les bobines 48 sont reliées entre elles au moyen de conducteurs de liaison 49 traversant le réflecteur.

Les deux inducteurs 42, 43 sont reliés entre eux par deux chapes 55 de façon qu'ils s'étendent parallèlement l'un à l'autre selon un écartement correspondant à celui existant entre les rails 2, 3 de la voie. Chaque chape a une forme de U comprenant une base 59 bordée par deux ailes 60. La base 59 s'applique contre deux extrémités voisines des deux inducteurs 42, 43 et son épaisseur est suffisante pour loger, dans deux évidements, deux extrémités 50 des noyaux d'inducteurs 44 qui font saillie au-delà d'un dernier pôle magnétique 45. La base 59 de chaque chape 55 est fixée sur une face d'extrémité des deux réflecteurs d'inducteurs 51 au moyen de vis 66.

Les rails 2, 3 de la voie constituent, vis-à-vis des inducteurs 42, 43, les induits des deux moteurs linéaires. Les profilés 4, 5 en forme de U assurent, de par leur caractéristique conductrice, la circulation des courants induits engendrés par les champs magnétiques variables issus des inducteurs, tandis que les plaquettes 12 à 14 assurent, de par leur caractéristique magnétique, la fermeture des champs magnétiques. De façon surprenante, la Demanderesse a constaté que l'absence de couche ferromagnétique dans la région des rebords 11 de chaque profilé en forme de U ne provoquait pas de pertes magnétiques significatives. C'est cette constatation qui lui a permis d'envisager de concevoir les rails 2, 3 sous une forme simple à fabriquer, à savoir un profilé conducteur en U sur lequel sont rapportées des plaquettes ferromagnétiques, plutôt que sous la forme d'un profilé en U bicouche comprenant une couche conductrice et une couche ferromagnétique.

Les trois faces de chaque inducteur 42, 43 coopérant avec l'induit 2, 3 respectif sont dites "actives", tandis que sa face portant le réflecteur 51 est dite "inactive".

Le bloc moteur 40 porte des moyens de roulement et de guidage du mobile 30 le long de la voie 1. On distingue tout d'abord deux paires de roues porteuses 53, disposées respectivement à deux extrémités du bloc moteur 40. Chaque roue est disposée approximativement dans le prolongement du noyau 44 de l'inducteur adjacent et montée à rotation sur un axe 54 s'étendant sensiblement dans le plan longitudinal médian du bloc moteur. Cet axe est porté par les ailes 60 de la chape 55. L'agencement est tel que la chape 55 et les roues porteuses 53 ne dépassent pas latéralement par rapport au bloc moteur. Par contre, les roues porteuses dépassent légèrement au-dessus et au-dessous du bloc moteur de façon qu'elles puissent prendre appui respectivement sur les deux ailes inférieures 8 des profilés en forme de U des induits, un jeu étant ménagé entre les roues porteuses 53 et les ailes supérieures 7 de ces profilés.

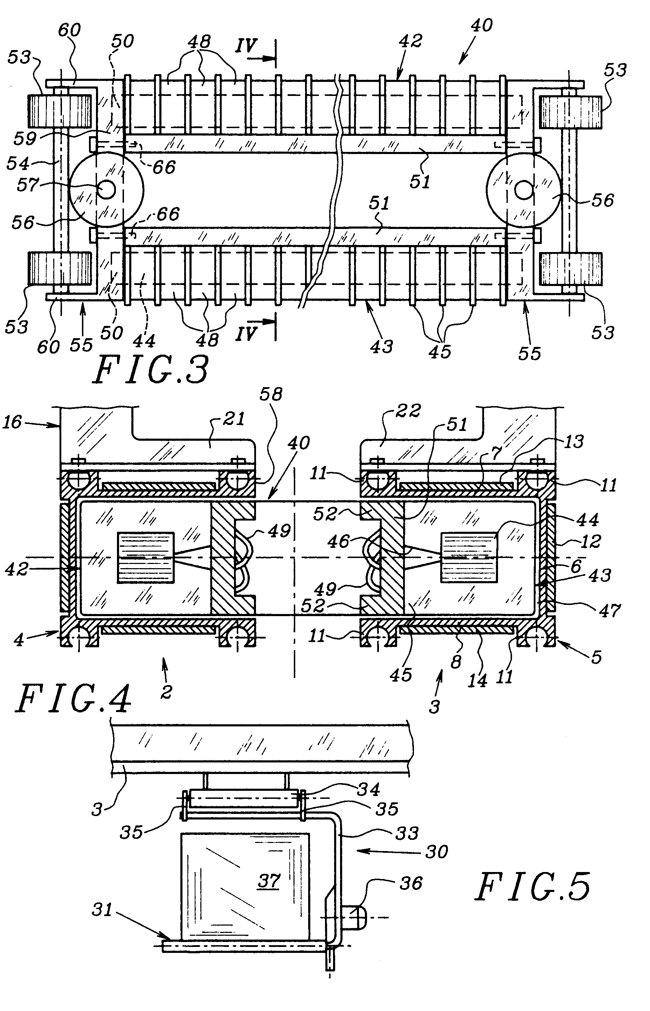

Les moyens de guidage latéral du bloc moteur 40 dans les rails 2, 3 comprennent deux galets de guidage 56 disposés respectivement au voisinage des deux extrémités du bloc moteur, sur une face supérieure de celui-ci. Chaque galet de guidage 56 est disposé parallèlement à la face supérieure du bloc moteur et est monté tourillonnant sur un axe 57 traversant la base 59 de la chape 55 dans son épaisseur. Le diamètre de chaque galet de guidage est tel que celui-ci est reçu avec un faible jeu entre les rebords supérieurs 11 des deux profilés en forme de U 4,5 des induits (figures 2), ceux-ci lui servant de rails de guidage et présentant à cet effet une surface de guidage 58 (figure 4) plane, perpendiculaire à l'aile adjacente 7 du profilé en forme de U 4, 5. Dans cet exemple, chaque galet de guidage 56 a une épaisseur un peu supérieure à la hauteur de ladite surface de guidage 58.

Les deux extrémités du bloc moteur 40 sont recouvertes de deux capots 67 (figures 1, 2) portant des moyens émetteurs et récepteurs de signaux 68 permettant de prévenir toute collision entre deux mobiles successifs et d'adapter éventuellement leurs vitesses respectives.

Le boîtier 34 auquel est suspendu le plateau 31 du mobile contient des moyens électroniques permettant la commande automatique du déplacement du mobile le long de la voie 1 et de son freinage en fonction de sa destination et des autres mobiles voisins circulant sur la même voie : il contient notamment un automate et des circuits électroniques associés.

Un autre boîtier parallélépipédique 62 équipe le mobile 30. Il s'étend, dans cet exemple, sur une longueur supérieure à celle du bloc moteur 40 et est disposé au-dessus de celui-ci et parallèlement à lui. Ce second boîtier 62 contient des moyens d'alimentation en électricité pour alimenter le premier boîtier électronique 34 sous faible tension (24 V) à partir du réseau triphasé précité : il contient, outre l'alimentation électronique, des dispositifs électriques associés tels que des disjoncteurs, des relais statiques, et un circuit de détection de position du mobile le long de la voie.

Le second boîtier 62 porte, sur une face supérieure, deux supports de frotteurs 64 éloignés l'un de l'autre le long du boîtier et portant chacun cinq frotteurs électriques 65 agencés pour coopérer respectivement avec les cinq pistes de contact électrique 23 portées par les pattes de fixation 16. Ces frotteurs permettent de fournir au second boîtier 62 l'énergie électrique nécessaire ainsi qu'un signal de commande à distance, en toute position du mobile le long de la voie et durant son déplacement. Le premier boîtier 34 est relié électriquement au second boîtier 62 pour recevoir de celui-ci son alimentation électrique et échanger des signaux de commande.

Les deux boîtiers 34, 62 sont fixés au bloc moteur 40 par les deux axes 57 des galets de guidage, qui se prolongent de part et d'autre du bloc moteur. Les conducteurs de liaison électriques entre ces boîtiers sont logés dans deux gaines tubulaires 61 disposées au voisinage des deux extrémités du bloc moteur et s'étendant parallèlement aux axes 57, entre les deux inducteurs.

En fonctionnement, l'alimentation du bobinage des inducteurs 42, 43 du bloc moteur 40 engendre des forces magnétiques provoquant le déplacement du mobile le long de la voie. La configuration de la voie à deux rails 2, 3 en forme de U permet avantageusement au mobile de prendre facilement des aiguillages.

La présence de virages sur la voie provoque une augmentation locale de l'entrefer et donc une diminution de la force motrice dont il faut tenir compte dans l'élaboration du projet. Cette remarque vaut également pour des courbes se présentant dans un plan vertical : outre l'augmentation d'entrefer, il faut ici veiller à limiter le rayon de courbure pour que les roues porteuses 53 soient toujours en contact avec la voie et que les inducteurs 42, 43 ne viennent pas frotter contre l'aile inférieure 8 des profilés 4, 5 en forme de U des rails. Ce dernier problème pourra être résolu en prévoyant localement des pistes de roulement surélevées par rapport à l'aile 8 des profilés, par exemple des pistes rapportées sur les rails.

Le dispositif de manutention selon l'invention permet de déplacer des mobiles à la vitesse relativement modérée de 2m/sec. Ceci est obtenu d'une part en limitant l'espacement entre les pôles 45 des inducteurs, d'autre part en utilisant des systèmes de contrôle électronique adaptés.

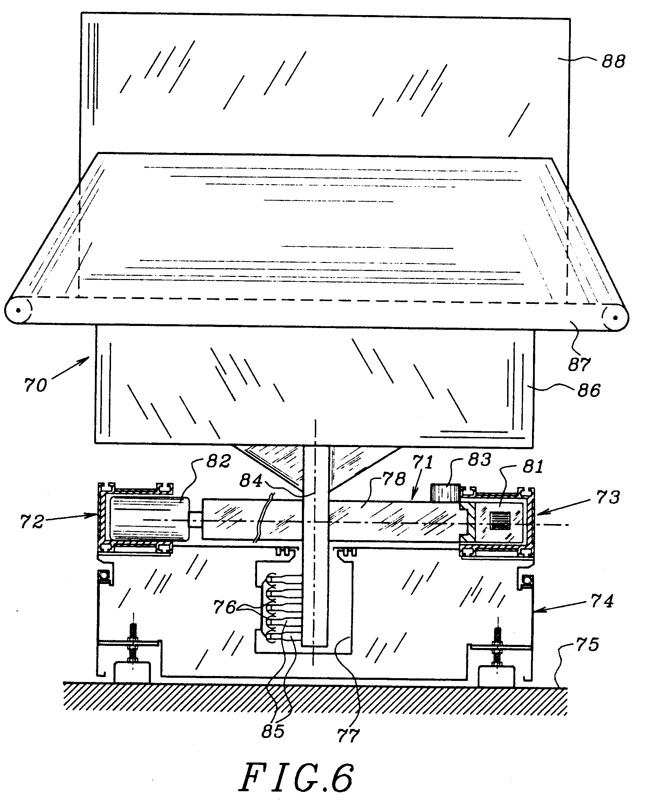

La variante de la figure 6 se distingue essentiellement de la précédente en ce que le mobile 70 n'est plus suspendu au bloc moteur 71 mais est au contraire fixé au-dessus de celui-ci. Dans ces conditions, les rails 72, 73 de la voie sont espacés davantage l'un de l'autre afin de conférer au mobile 70 la stabilité nécessaire. Ils sont montés sur un bâti 74 reposant sur le sol 75. Les pistes de contact électrique 76 sont disposées dans un évidement longitudinal 77 du bâti.

Le bloc moteur 71 comprend un châssis 78 s'étendant sensiblement dans un plan, parallèlement au sol 75, et sur lequel sont fixés d'une part les deux inducteurs 81, d'autres part les quatre roues porteuses 82, et enfin quatre galets de guidage 83 coopérant deux à deux avec un bord des rails 72, 73.

Le châssis 78 porte des traverses 84 auxquelles sont fixés d'une part le mobile 70 à une première extrémité, d'autre part des frotteurs électriques 85 à l'autre extrémité.

Le mobile 70 inclut un boîtier 86 rassemblant tous les circuits d'alimentation en énergie électrique et les circuits électriques de commande, surmonté d'un plateau 87 à tapis roulant supportant un colis 88. Le boîtier 86 est fixé sur les traverses 84 du châssis de bloc moteur.

## Revendications

1. Dispositif de manutention comprenant une voie (1) s'étendant selon un trajet déterminé et constituant un chemin de roulement pour un ou plusieurs mobiles (30) disposés le long de celle-ci, cette voie comportant des moyens de guidage (58) pour les mobiles, lesdits mobiles comportant chacun des moyens de roulement (53) pour coopérer avec ledit chemin de roulement et des moyens d'entraînement (40) pour assurer leur déplacement individuel le long de la voie, les moyens d'entraînement comprenant un moteur électrique linéaire composé d'un inducteur (42, 43) porté par le mobile et s'étendant parallèlement à la voie, comprenant une pluralité de pôles magnétiques (45) répartis le long de l'inducteur et entre lesquels sont interposées une pluralité de bobines de fil conducteur (48), et d'un induit (4, 5) porté par la voie et s'étendant le long de celle-ci de façon à pouvoir coopérer avec l'inducteur avec interposition d'un entrefer d'épaisseur déterminée,
caractérisé en ce que
ledit inducteur (42, 43) et ledit induit (4, 5) présentent, tel qu'observés en section transversale :
- le premier une forme rectangulaire définissant trois faces actives et une face inactive, et
- le second une forme de U définissant trois faces actives et adaptée pour loger l'inducteur de façon que les faces actives respectives de l'inducteur et de l'induit coopèrent entre elles deux à deux,
ledit chemin de roulement de la voie étant constitué par l'une desdites faces actives (8) de l'induit, les moyens de roulement (53) de chaque mobile prenant appui sur cette face.

2. Dispositif selon la revendication 1, dans lequel les moyens d'entraînement de chaque mobile comprennent deux moteurs électriques linéaires identiques au moteur précité, comportant :
- deux inducteurs respectifs (42, 43) portés par le mobile, juxtaposés de façon à s'étendre parallèlement l'un à l'autre, leurs faces inactives respectives étant situées en regard l'une de l'autre ; et
- deux induits respectifs (4, 5) portés par la voie, juxtaposés de façon à s'étendre parallèlement l'un à l'autre en étant tournés l'un vers l'autre.

3. Dispositif selon l'une des revendications précédentes, dans lequel lesdits moyens de guidage comprennent un bord libre longitudinal (58) défini par ladite forme en U de l'induit (4, 5).

4. Dispositif selon la revendication 2, dans lequel les deux induits (4, 5) de la voie s'étendent dans un plan général sensiblement horizontal, ledit chemin de roulement de la voie étant constitué par deux faces actives respectives (8) des deux induits s'étendant horizontalement à un niveau le plus bas.

5. Dispositif selon l'une quelconque des revendications précédentes, dans lequel chaque induit comprend :
- un profilé (4, 5) s'étendant le long de la voie et présentant ladite forme de U, réalisé en un matériau bon conducteur de l'électricité ; et
- trois plaquettes longitudinales (12 à 14) ayant des dimensions correspondant sensiblement à celles des trois faces actives dudit induit et étant disposées respectivement contre trois faces extérieures dudit profilé, opposées auxdites trois faces actives, ces plaquettes étant réalisées en un matériau ferromagnétique.

## Claims

1. Handling device including a track (1) extending over a determined route and constituting a travel path for one or more mobile elements (30) disposed along it, the said track comprising guide means (58) for the mobile elements, the said mobile elements each comprising travelling means (53) for cooperating with the said travel path and drive means (40) for ensuring their individual movement along the track, the drive means including a linear electric motor composed of an inductor (42, 43) borne by the mobile element and extending parallel to the track, including a plurality of magnetic (45) poles distributed along the inductor and between which are placed a plurality of coils of conducting wire (48), and of an armature (4, 5) borne by the track and extending along it so as to be able to cooperate with the inductor, a spark gap of predetermined width being interposed therebetween,
characterized in that
the said inductor (42, 43) and the said armature (4, 5) have, as viewed in cross section:
- the former, a rectangular shape defining three active faces and one inactive face, and
- the second, a U shape defining three active faces and adapted to house the inductor in such a way that the respective active faces of the inductor and of the armature cooperate with one another, two by two;
the said travel path of the track being constituted by one of the said active faces (8) of the armature, the travelling means (53) of each mobile element bearing upon the said face.

2. Device according to claim 1, wherein the drive means for each mobile element include two linear electric motors identical with the aforementioned motor, comprising:
- two respective inductors (42, 43) carried by the mobile element, juxtaposed so as to extend parallel to one another, their respective inactive faces being located opposite one another; and
- two respective armatures (4, 5) carried by the track, juxtaposed so as to extend parallel to one another and facing one another.

3. Device according to one of the preceding claims, wherein the said guide means include a longitudinal free edge (58) defined by the said U shape of the armature (4, 5).

4. Device according to claim 2, wherein the two armatures (4, 5) of the track extend in a general substantially horizontal plane, the said travel path of the track being constituted by two respective active faces (8) of the two armatures extending horizontally at a lowest level.

5. Device according to any one of the preceding claims, wherein each armature includes:
- a channel (4, 5) extending along the track and having the said U shape, made of a material that is a good conductor of electricity; and
- three longitudinal plates (12 to 14) having dimensions corresponding substantially to those of the three active faces of the said armature and disposed respectively against three external faces of the said channel, opposite the said three active faces, these plates being made of a ferromagnetic material.

## Patentansprüche

1. Transporteinrichtung mit einer Fahrbahn (1), die sich entlang einer vorbestimmten Spur erstreckt und die eine Rollbahn für einen oder mehrere, entlang dieser angeordneten Träger (30) bildet, wobei diese Fahrbahn Führungsmittel (58) für die Träger aufweist, jeder der Träger Rollmittel (53), um mit der Rollbahn zusammenzuwirken, und Antriebsmittel (40) aufweist, um die individuelle Verschiebung entlang der Fahrbahn zu gewährleisten, wobei die Antriebsmittel einen elektrischen Linearmotor aufweisen, der einen Erreger (42, 43), der von dem Träger getragen wird und sich parallel zu der Fahrbahn erstreckt, der eine Vielzahl von Magnetpolen (45) umfaßt, die sich entlang des Erregers verteilen und zwischen denen eine Vielzahl von Spulen (48) aus leitendem Draht angeordnet sind, und einen Anker (4, 5) umfaßt, der von der Fahrbahn getragen wird und der sich entlang dieser in der Weise erstreckt, daß er mit dem Erreger unter Zwischenfügung eines Luftspalts vorbestimmter Dicke zusammenwirken kann,
**dadurch gekennzeichnet,** daß
der Erreger (42, 43) und der Anker (4, 5) in der Querschnittsansicht aufweisen:
- der Erste eine rechteckige Form, die drei aktive Seiten und eine inaktive Seite definieren, und
- der Zweite ein U-Form, die drei aktive Seiten definiert und dazu dient den Erreger derart zu führen, daß die entsprechenden aktiven Seiten des Erregers und des Ankers miteinander zwei und zwei zusammenwirken,
wobei die Rollbahn der Fahrbahn durch eine der aktiven Seiten (8) des Ankers gebildet wird, wobei die Rollmittel (53) jedes Trägers Halt auf der Oberfläche finden.

2. Vorrichtung nach Anspruch 1, worin die Antriebsmittel jedes Trägers zwei elektrische Linearmotoren umfassen, die identisch mit dem vorerwähnten Motor sind, die aufweisen:
- zwei entsprechende Erreger (42, 43), die von dem Träger getragen werden, die derart gegenüberstehend angeordnet sind, daß sie sich parallel zueinander erstrecken, wobei ihre entsprechenden inaktiven Seiten eine gegenüber der anderen angeordnet sind, und
- zwei entsprechende Anker (4, 5), die von der Fahrbahn getragen werden, die derart gegenüberstehend angeordnet sind, daß sie sich zueinander parallel erstrecken, wenn sie gegeneinander gedreht werden.

3. Vorrichtung nach einem der vorangegangenen Ansprüche, worin die Führungsmittel eine freie longitudinale Kante (58) aufweisen, die durch die genannte U-Form des Ankers (4, 5) definiert wird.

4. Vorrichtung nach Anspruch 2, worin die beiden Anker (4, 5) der Fahrbahn sich in einer im allgemeinen genau horizontalen Ebene erstrecken, wobei die Rollbahn von zwei entsprechenden aktiven Seiten (8) der zwei Anker gebildet wird, die sich in horizontaler Richtung auf einem tiefsten Niveau befinden.

5. Vorrichtung nach einem beliebigen der vorangegangenen Ansprüche, worin jeder der Anker aufweist:
- ein Profil (4, 5), das sich entlang der Fahrbahn erstreckt und sich in der Form eines U darstellt, das aus einem elektrisch gut leitenden Material besteht; und
- drei longitudinale Plättchen (12 bis 14), die Dimensionen haben, die genau denjenigen der drei aktiven Seiten dieses Ankers entsprechen und die entsprechend gegen die drei äußeren Seiten dieses Profils gegenüberstehend der drei anderen aktiven Seiten angeordnet sind, wobei die Plättchen aus einem ferromagnetischen Material bestehen.
